(19) Europäisches Patentamt
European Patent Office
Office européen des brevets

(11) **EP 4 195 582 A1**

(12) **EUROPEAN PATENT APPLICATION**

(43) Date of publication:
**14.06.2023 Bulletin 2023/24**

(21) Application number: **21306726.7**

(22) Date of filing: **08.12.2021**

(51) International Patent Classification (IPC):
**H04L 9/08** $^{(2006.01)}$

(52) Cooperative Patent Classification (CPC):
**H04L 9/0866;** H04L 2209/04; H04L 2209/34

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Thales Dis France SAS**
**92190 Meudon (FR)**

(72) Inventors:
• **MIGAIROU, Vincent**
**92190 MEUDON (FR)**

• **BERZATI, Alexandre**
**92190 Meudon (FR)**
• **TEGLIA, Yannick**
**92190 Meudon (FR)**
• **MERANDAT, Marc**
**92190 MEUDON (FR)**

(74) Representative: **Bricks, Amélie**
**Thales Dis France SAS**
**Intellectual Property Department**
**6, rue de la Verrerie**
**92190 Meudon (FR)**

(54) **A METHOD FOR CORRECTING AN ERRONEOUS FUZZY DATA KEY**

(57) The invention relates to a method for correcting an erroneous fuzzy data key, and computing system. The method according to the invention comprises the steps of providing an integrated circuit and an initial fuzzy data key (K) with n bits; providing an encoding helper data algorithm (HDA); splitting the initial fuzzy data key into a first key subset(KeyA) and a second key subset (KeyB); calculating helper data (HKeyA) from the first key subset (KeyA) using the encoding helper data algorithm (HDA); calculating a masked error correction helper data (MHKey) as a combination of the helper data (HKeyA) and of the second key subset (KeyB); registering the masked error correction helper data in a memory (NVM); providing an erroneous fuzzy data key comprising a first erroneous key subset (KeyA') and a second erroneous key subset (KeyB') and comprising at least one erroneous bit in its first erroneous key subset (KeyA') and/or in its second erroneous key subset (KeyB'); unmasking the masked error correction helper data (MHKey) registered in the memory (NVM) using the second erroneous key subset (KeyB'); and correcting the erroneous fuzzy data key using the unmasked helper data (HKeyA'). The method according to the invention is implemented in Physical Unclonable Functions applications.

FIG. 1

EP 4 195 582 A1

## Description

### FIELD OF THE INVENTION

The invention relates to a method for correcting an erroneous fuzzy data key, comprising providing an integrated circuit and an accurate initial fuzzy data key (K) with n bits. It also relates to a corresponding computing system for correcting such an erroneous fuzzy data key. In particular, the fuzzy data key is a hardware key. In particular, the method according to the invention is a method for correcting a hardware key for information leakage cancelling.

### BACKGROUND OF THE INVENTION

Physical Unclonable Functions, also referred as PUFs, are specific electrical cells designed to extract entropy from industrialization process variations. The PUF intrinsic structure makes it very sensitive to environmental conditions variation such as voltage or temperature. Hence, stabilizing PUFs answers to a given stimulus, whatever the operating conditions, is a challenge.

One solution to stabilize PUFs is to use error correcting codes aiming at detecting any unexpected bit value, and correcting it.

A main drawback of this approach is the use of a Helper Data, required by the error decoding process that results from the combination of the PUF bits. Since the PUFs secrecy is a key asset to build security application upon it, storing this Helper Data in a non-volatile memory introduces an information leakage.

This problematic is mostly addressed in biometrics - through fuzzy extractor scheme - that allows to deal with versatile data while preserving its confidentiality. However, the related schemes are not well-suited for deployment in embedded systems as it may require additional dedicated hardware resources.

The document entitled "Fuzzy Extractors: How to Generate Strong Keys from Biometrics and Other Noisy Data", Yevgeniy Dodis et al, 20 January 2008, provides formal definitions and efficient secure techniques for turning noisy information into keys usable for any cryptographic application, and, in particular, reliably and securely authenticating biometric data. The techniques disclosed in this document does not just apply to biometric information, but to any keying material that, unlike traditional cryptographic keys, is not reproducible precisely and not distributed uniformly. It is proposed two primitives: a fuzzy extractor reliably extracts nearly uniform randomness $R$ from its input; the extraction is error-tolerant in the sense that $R$ will be the same even if the input changes, as long as it remains reasonably close to the original. Thus, $R$ can be used as a key in a cryptographic application. A secure sketch produces public information about its input w that does not reveal $w$, and yet allows exact recovery of w given another value that is close to $w$. Thus, it can be used to reliably reproduce error-prone biometric inputs without incurring the security risk inherent in storing them. The primitives are defined to be both formally secure and versatile, generalizing much prior work. In addition, it is provided nearly optimal constructions of both primitives for various measures of "closeness" of input data, such as Hamming distance, edit distance, and set difference.

### SUMMARY OF THE INVENTION

Considering the above, a need exists for voiding this information leakage using PUFs intrinsic properties by benefiting from available resources.

In accordance with a first aspect, the invention concerns a method for correcting an erroneous fuzzy data key comprising :

> providing an integrated circuit and an initial fuzzy data key K with n bits, with n an integer;
> providing an encoding helper data algorithm (HDA);
> splitting the initial fuzzy data key into a first key subset KeyA and a second key subset KeyB;
> calculating helper data HKeyA from the first key subset KeyA using the encoding helper data algorithm HDA;
> calculating a masked error correction helper data MHKey as a combination of the helper data HKeyA and of the second key subset KeyB;
> registering the masked error correction helper data in a memory (NVM);
> providing an erroneous fuzzy data key comprising a first erroneous key subset KeyA' and a second erroneous key subset KeyB' and comprising at least one erroneous bit in its first erroneous key subset KeyA' and/or in its second erroneous key subset KeyB';
> unmasking the masked error correction helper data MHKey registered in the memory (NVM) using the second erroneous key subset KeyB';and
> correcting the erroneous fuzzy data key using the unmasked helper data HKeyA'.

Preferentially,

- the initial fuzzy data key is comprised in the integrated circuit;
- the fuzzy data key is contained in a secure enclave of the integrated circuit and is private, whereas the masked error correction helper data registered in the memory is public data;
- the memory, in which is registered the masked error correction helper data, is a non-volatile memory;
- the fuzzy data key is a hardware key;
- the first key subset KeyA is a key subset with n-k bits and the second key subset KeyB is a key subset with k bits, with k an integer;
- the method further comprises the step of providing a code correction algorithm;

- the code correction algorithm implements a calculation of Hamming distances;
- the calculation of the masked error correction helper data MHKey results from a linear combination of the helper data HKeyA and the second key subset KeyB;
- the linear combination is a combination which is provided by a function XOR;
- the fuzzy key is a hardware key and the method is implemented as a physical unclonable function; and
- the method is implemented in a biometric application.

In accordance with a second aspect, the invention concerns a computing system for correcting an erroneous fuzzy data key, comprising

an integrated circuit and an initial fuzzy data key (K) with n bits with n an integer;
an encoding helper data algorithm (HDA);
the initial fuzzy data key being split into a first key subset (KeyA) and a second key subset (KeyB);
helper data (HKeyA) calculated from the first key subset (KeyA) using the encoding helper data algorithm (HDA);
a masked error correction helper data (MHKey) calculated as a combination of the helper data (HKeyA) and of the second key subset (KeyB);
the masked error correction helper data being registered in a memory (NVM);
an erroneous fuzzy data key comprising a first erroneous key subset (KeyA') and a second erroneous key subset (KeyB') and comprising at least one erroneous bit in its first erroneous key subset (KeyA') and/or in its second erroneous key subset (KeyB');
the masked error correction helper data (MHKey) registered in the memory (NVM) being unmasked using the second erroneous key subset (KeyB');and correcting means for correcting the erroneous fuzzy data key using the unmasked helper data (HKeyA').

## BRIEF DESCRIPTIONOF THE DRAWINGS

Other features and aspects of the present invention will be apparent from the following description and the accompanying drawings, in which

Fig. 1 illustrates schematically the steps that lead to the registering or encoding of the masked helper data according to the method of the invention;

Fig. 2 illustrates schematically the steps that lead to the correcting of an erroneous fuzzy data key according to the method of the invention ; and

Fig. 3 is a block diagram that illustrates a computing system implementation of the method according to the invention.

## DETAILED DESCRIPTION OF THE INVENTION

The method according to the invention is designed in the context of physical unclonable functions or PUFs, with wider applications targets, such as applications in biometric or noisy data.

A PUF is a physical object that, for a given input and conditions, provides a physically defined "digital fingerprint" output that serves as a unique identifier, for example for a semiconductor device such as a microprocessor. PUFs are most often based on unique physical variations, which occur naturally during semiconductor manufacturing. Hence, a PUF is a physical entity embodied in a physical structure. Today, PUFs are usually implemented in integrated circuits and are typically used in applications with high security requirements. Cryptographic applications, entropy and security targets are of strong concerns.

PUFs depend on the uniqueness of their physical microstructure. This microstructure depends on random physical factors introduced during manufacturing. These factors are unpredictable and uncontrollable, which makes it virtually impossible to duplicate or clone the structure. Unclonability means that each PUF device has a unique and unpredictable way of mapping challenges to responses, even if it was manufactured with the same process as a similar device, and it is infeasible to construct a PUF with the same challenge-response behaviour as another given PUF because exact control over the manufacturing process is infeasible.

Unclonable silicon keys strongly rely on hardware resources that, by nature, require to be stabilized and corrected.

In order to provide the correcting of such keys, the method according to the invention implements two main phases, that relate generally to the encoding of the helper data which are used for the correcting, and to the decoding of such data, and correcting.

The first phase, that relates to the encoding, comprises :

- providing an integrated circuit and an accurate initial fuzzy data key K with n bits, n being an integer; providing an encoding helper data algorithm HDA;
- splitting the initial fuzzy data key into a first key subset KeyA and a second key subset KeyB;
- calculating helper data HKeyA from the first key subset KeyA using the encoding helper data algorithm HDA;
- calculating a masked error correction helper data MHKey as a combination of the helper data HKeyA and of the second key subset KeyB; and
- registering the masked error correction helper data in a memory NVM.

The second phase, that relates to the decoding, and to the correcting, comprise :

- providing an erroneous fuzzy data key comprising a first erroneous key subset (KeyA') and a second erroneous key subset (KeyB') and comprising at least one erroneous bit in its first erroneous key subset KeyA' and/or in its second erroneous key subset KeyB';
- unmasking the masked error correction helper data MHKey registered in the memory NVM using the second erroneous key subset KeyB';
- and correcting the erroneous fuzzy data key using the unmasked helper data HKeyA'.

Thus, the method according to the invention relies on the split of PUF bits usage. While the whole part of the key is possibly provided for the applicative usage, a subset is used to mask the helper data itself. This allows to store the masked helper data in a non-volatile memory that will be de-masked on-demand, while keeping the totality of available bits for the final application.

In other words, the method according to the invention allows to use a helper data for correcting the key while ensuring a maximal entropy for securing the key i. e. a n-bits entropy for a n-bits key length, with n a predetermined integer. The entropy is not loss due to helper data exposure.

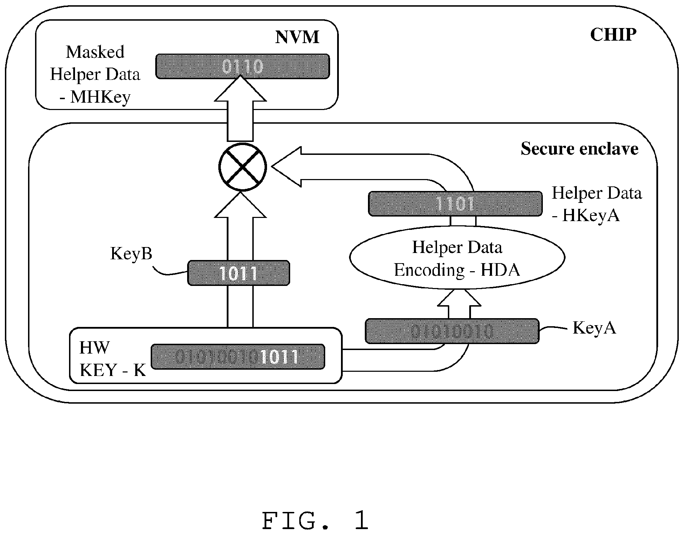

The encoding phase is illustrated in Fig. 1. The steps of this phase lead to registering the masked error correction helper data in a non-volatile memory. Assuming that the system is handling a key with high entropy, the method according to the invention allows to keep the source key entropy while performing code correction. The term key is used as an object which entropy meets the bit length security target in order to be used in a cryptographic application. In practice, the physical bits of the key are replaced by the PUF bits.

The encoding phase per se is implemented inside a chip or integrated circuit, in a secure enclave of such chip/integrated circuit. Considering an initial key K with n bits, with n an integer, one can select a linear corrector code C with Helper Data H of length k, with k an integer and k<n.

The initial key K is split into two subsets, which are:

$$KeyA = K[0:n\text{-}k[$$

$$KeyB = K[n\text{-}k:n[$$

Considering that the key K may vary, an error correction helper data scheme is defined as follow:

$$HKeyA = C(KeyA)$$

Since HKeyA results from a linear combination of KeyA, KeyB is used, according to the invention, to mask it and to produce the masked helper data

MHKey using a bitwise masking operator. As an example such an operator may be the exclusive OR operator as follows:

$$MHKey = HKeyA \text{ XOR } KeyB$$

XOR combines linearly HKeyA and KeyB.

With a maximal entropy key, the data leakage is voided. It may be stored and exposed publicly safely in a non-volatile memory, for example a flash memory.

The encoding phase according to the invention may be implemented inside or outside the integrated circuit, in a secure tester for instance.

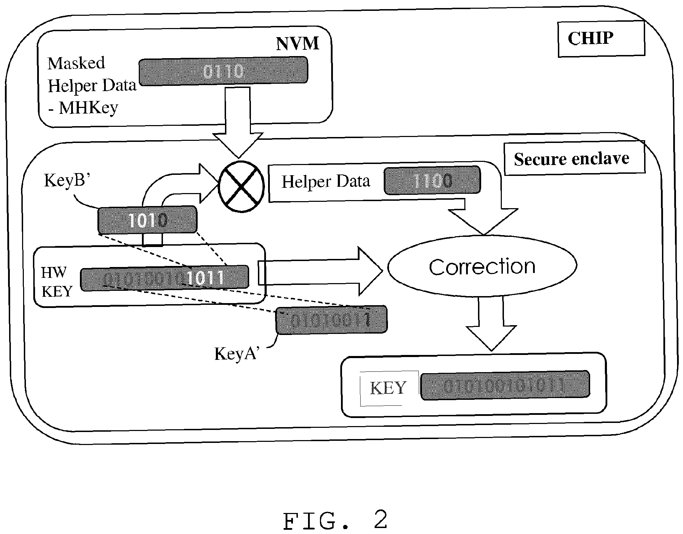

The decoding phase of the masked helper data MHKey is illustrated in Fig. 2. It may be implemented inside a chip/integrated circuit. The purpose of the decoding phase is to provide a full n-bit length corrected key K.

In the case of a PUF application, both key subsets KeyA and KeyB may contain versatile bits. In most cases, the key subsets will not be erroneous. However, in certain cases, one at least of the key subsets will contain at least an erroneous bit leading to an erroneous fuzzy data key. In such certain cases, the erroneous fuzzy data key comprises at least one erroneous bit in its first erroneous key subset KeyA' and/or in its second erroneous key subset KeyB'. Practically, the errors come in several forms. The most common situation is that a bit in a stream of the data key gets flipped, i.e. a 0 becomes a 1 or a 1 becomes a 0. However, it is also possible for a bit to get deleted, or for an extra bit to be inserted. In some situations, burst errors occur, where several successive bits are affected.

In order to perform the correcting according to the invention, the public masked helper data MHKey is unmasked using the second erroneous key subset KeyB', which may comprise at least one bit that is erroneous, or which is equal to the native or accurate second key subset KeyB, if it does not comprise any bit error.

$$HKeyA' = MHKey \text{ XOR } KeyB'$$

Then, the helper data HKeyA' is fed into the code corrector C with KeyA' resulting into a n-bit correction vector. It is used to correct the erroneous key subsets KeyA' and KeyB'. The n-bit full length initial key K is finally corrected and available for application.

Even if the second erroneous key subset KeyB' comprises one or more errors, the correction may be achieved using an appropriate algorithm for correction. For example, such algorithm, that may be used for correcting the erroneous fuzzy data key, is based on the calculation of the Hamming distance. A key issue in designing any error correcting code is making sure that any two valid codewords are sufficiently dissimilar so that corruption of a single bit or, possibly, a small number of bits, does not turn one valid code word into another. To measure the distance between two codewords, the number of bits that differ between them are counted. If this is achieved in hardware or software, the two codewords can just be XORed and the number of 1 bits counted in the result. This count is called the Hamming distance. The key significance of the hamming distance is that, if two codewords have a Hamming distance of d between them, then it would take d single bit errors to turn one of them into the other.

One of the properties of the corrective code lies in the fact that it is possible to detect/correct errors occurring on a word of the code, the code being all the elements without error of type message and helper data. Thus, it is possible to correct any errors both on the message itself and on the calculated redundancy. It is here that one of the basis of the invention resides, given that the masked helper data which is stored in memory is reliable, a possible error which would occur on the helper data part would necessarily come from the second erroneous key subset KeyB' used to unmask it. Since a bitwise non-broadcast operation, such as XOR operation, is used for masking, the invention thus indirectly allows to correct KeyB' and KeyA'.

The invention then not only allows to correct entire initial key without data leakage, but also to use the full key, with a maximal entropy.

It is noted that, if the key subsets do not include any erroneous bit, the method according to the invention will be implemented as above, but it will not lead, in such a case, to any correction.

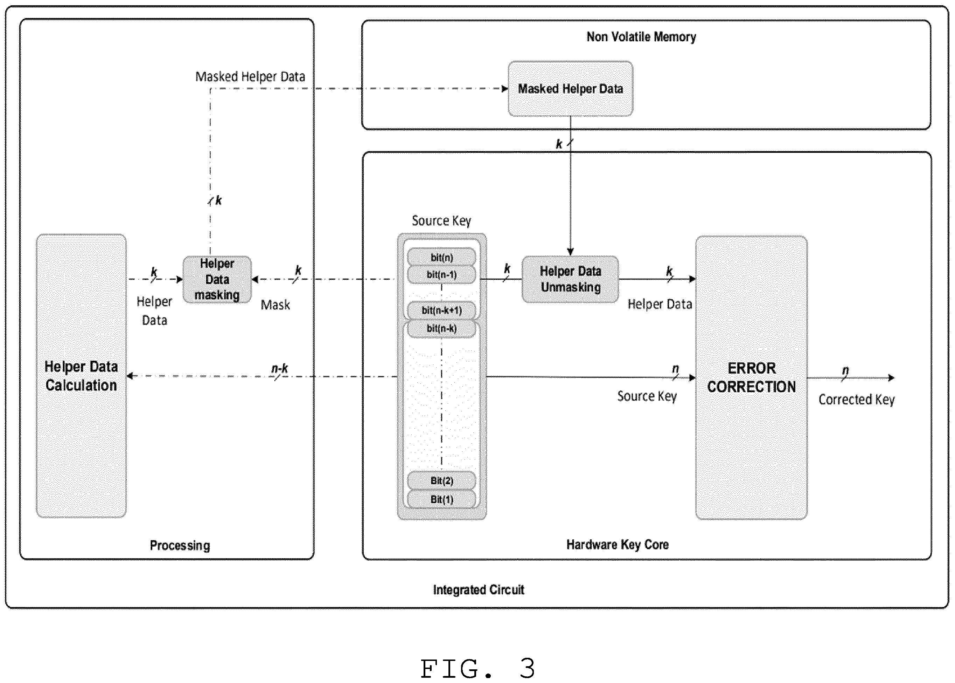

Fig. 3 illustrates a computing system implementation of the method according to the invention. This system comprises a processing unit, an integrated circuit and a non-volatile memory. In the embodiment of Fig. 3, the processing unit is comprised in the integrated circuit. However, according to other embodiments, it may be located outside this integrated circuit. The processing unit allows to calculate the helper data and to provide the masking of these data. Having the processing unit located inside the integrated circuit may present advantages. In particular, this allows the calculation of the helper data and/or other confidential data not be at any time exposed outside the integrated circuit. The non-volatile memory stores the masked helper data. The source key is contained in the integrated circuit. The error correction is handled in the integrated circuit, after helper data unmasking.

Finally, a purpose of the invention is not only to store information allowing the key from the PUF to be found. Another purpose is also not to reveal information that would make an attack aimed at discovering the key easier. Since the helper data is by construction dependent on the value of the secret key, it contains information that helps reduce the complexity of attacks.

It is to be noted that, as cryptographic applications are concerned, for which the entropy of the key bits is a fundamental element, the knowledge of a data helper reduces this entropy by providing bitwise dependency information.

The knowledge of KeyB is important for two main reasons: it is part of the secret that the method according to the invention is intending to protect, and the knowledge of KeyB makes it possible to decrypt the helper data which, itself, provides information derived from the complete key (KeyA and KeyB).

Hence, the advantages brought by the method according to the invention are as follows:

- it does not requires any material external to integrated circuit such as a true random source;
- it allows to reduce the information leakage of the helper data, which is directly related to the code correction capabilities, and to the PUF intrinsic minimal entropy;
- it allows cryptographic applications to claim a n-security bits for a n-bit length corrected key. For instance, a study of the entropy loss of state of the art BCH (Bose-Chaudhuri-Hocquenghem) based methods can be found in Y. Dodis, R. Ostrovsky, L. Reyzin, and A. D. Smith. Fuzzy extractors: How to generate strong keys from biometrics and other noisy data;
- the bits that are used to mask the helper data, are also part of the key of interest, leading to maximal key length and entropy; and
- no area is lost for the bits which are dedicated to the correcting.

Considering the high security level of the PUF bits and related data such as the helper data for crypto applications, the method according to the invention allows to avoid data leakage leading to reduced security, showing increased weakness to attackers.

The method according to the invention is tailored for large-scale of embedded secure devices: from tags to secure elements. It allows to minimize the resource involved in the correcting process, while prior art known methods are using externals sources for helper data masking, requiring costly infrastructure.

Lastly, the method according to the invention allows to reach simultaneously three targets, which are:

- the use of the full length initial key while partially using it to mask helper data;
- performing a correction ensuring the key integrity; and
- allowing to obtain a corrected key having a source entropy and a same level of security as the initial key.

## Claims

1. A method for correcting an erroneous fuzzy data key , comprising

providing an integrated circuit and an initial fuzzy data key (K) with n bits, with n an integer;

providing an encoding helper data algorithm (HDA);

splitting the initial fuzzy data key into a first key subset (KeyA) and a second key subset (KeyB);

calculating helper data (HKeyA) from the first key subset (KeyA) using the encoding helper data algorithm (HDA);

calculating a masked error correction helper data (MHKey) as a combination of the helper data (HKeyA) and of the second key subset (KeyB);

registering the masked error correction helper data in a memory (NVM);

providing an erroneous fuzzy data key comprising a first erroneous key subset (KeyA') and a second erroneous key subset (KeyB') and comprising at least one erroneous bit in its first erroneous key subset (KeyA') and/or in its second erroneous key subset (KeyB');

unmasking the masked error correction helper data (MHKey) registered in the memory (NVM) using the second erroneous key subset (KeyB');and

correcting the erroneous fuzzy data key using the unmasked helper data (HKeyA').

2. The method of claim 1, wherein the initial fuzzy data key is comprised in the integrated circuit.

3. The method according to one of the claims 1 or 2, wherein the fuzzy data key is contained in a secure enclave of the integrated circuit and is private, whereas the masked error correction helper data registered in the memory is public data.

4. The method according to one of the claims 1, 2 or 3, wherein the memory, in which is registered the masked error correction helper data, is a non-volatile memory (NVM).

5. The method of one of the previous claims, wherein the fuzzy data key is a hardware key.

6. The method of one of the previous claims, wherein the first key subset (KeyA) is a key subset with n-k bits and the second key subset (KeyB) is a key subset with k bits, with k an integer.

7. The method according to one of the previous claims, further comprising the step of providing a code correction algorithm.

8. The method of claim 7, wherein the code correction algorithm implements a calculation of Hamming distances.

9. The method according to one of the previous claims, wherein the calculation of the masked error correction helper data (MHKey) results from a linear combination of the helper data (HKeyA) and the second key subset (KeyB).

10. The method according to claim 9, wherein the linear combination is a combination which is provided by a function XOR.

11. The method according to one of the previous claims, wherein the fuzzy key is a hardware key and the method is implemented as a physical unclonable function.

12. The method according to one of the claims 1 to 11, wherein it is implemented in a biometric application.

13. A computing system for correcting an erroneous fuzzy data key, comprising

an integrated circuit and an initial fuzzy data key (K) with n bits, with n an integer;

an encoding helper data algorithm (HDA);

the initial fuzzy data key being split into a first key subset (KeyA) and a second key subset (KeyB);

helper data (HKeyA) calculated from the first key subset (KeyA) using the encoding helper data algorithm (HDA);

a masked error correction helper data (MHKey) calculated as a combination of the helper data (HKeyA) and of the second key subset (KeyB);

the masked error correction helper data being registered in a memory (NVM);

an erroneous fuzzy data key comprising a first erroneous key subset (KeyA') and a second erroneous key subset (KeyB') and comprising at least one erroneous bit in its first erroneous key subset (KeyA') and/or in its second erroneous key subset (KeyB');

the masked error correction helper data (MHKey) registered in the memory (NVM) being unmasked using the second erroneous key subset (KeyB');and

correcting means for correcting the erroneous fuzzy data key using the unmasked helper data (HKeyA').

FIG. 1

FIG. 2

FIG. 3

Integrated Circuit

Non Volatile Memory

Masked Helper Data

Hardware Key Core

Helper Data Unmasking

ERROR CORRECTION

Corrected Key

Source Key

bit(n) bit(n-1) bit(n-k+1) bit(n-k) ... Bit(2) Bit(1)

Helper Data

Source Key

Processing

Masked Helper Data

Helper Data masking

Mask

Helper Data

Helper Data Calculation

Europäisches
Patentamt

European
Patent Office

Office européen
des brevets

# EUROPEAN SEARCH REPORT

Application Number

EP 21 30 6726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/156476 A1 (LEE YONG KI [KR] ET AL) 2 June 2016 (2016-06-02) * abstract * * paragraph [0007] – paragraph [0024] * * paragraph [0086] – paragraph [0092] * * figures 1, 11 * | 1-13 | INV. H04L9/08 |
| A | CHRISTOPH BÖSCH ET AL: "Efficient Helper Data Key Extractor on FPGAs", 10 August 2008 (2008-08-10), CRYPTOGRAPHIC HARDWARE AND EMBEDDED SYSTEMS ? CHES 2008; [LECTURE NOTES IN COMPUTER SCIENCE], SPRINGER BERLIN HEIDELBERG, BERLIN, HEIDELBERG, PAGE(S) 181 – 197, XP047029773, ISBN: 978-3-540-85052-6 * the whole document * | 1-13 | |
| A | US 2019/116052 A1 (KIM YONGSOO [KR] ET AL) 18 April 2019 (2019-04-18) * abstract * * paragraph [0005] – paragraph [0009] * | 1-13 | TECHNICAL FIELDS SEARCHED (IPC)<br><br>H04L |

The present search report has been drawn up for all claims

| Place of search | Date of completion of the search | Examiner |
|---|---|---|
| Munich | 17 May 2022 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 21 30 6726

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2022

| Patent document cited in search report | | Publication date | Patent family member(s) | | Publication date |
|---|---|---|---|---|---|
| US 2016156476 | A1 | 02-06-2016 | KR | 20160065297 A | 09-06-2016 |
| | | | US | 2016156476 A1 | 02-06-2016 |
| | | | US | 2018323968 A1 | 08-11-2018 |
| US 2019116052 | A1 | 18-04-2019 | CN | 109670346 A | 23-04-2019 |
| | | | DE | 102018123103 A1 | 18-04-2019 |
| | | | US | 2019116052 A1 | 18-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YEVGENIY DODIS et al.** *Fuzzy Extractors: How to Generate Strong Keys from Biometrics and Other Noisy Data,* 20 January 2008